# EUROPÄISCHE PATENTSCHRIFT

(11) **EP 4 077 881 B1**
(45) Veröffentlichungstag und Bekanntmachung des Hinweises auf die Patenterteilung: **28.01.2026**
(21) Anmeldenummer: 20839218.3
(22) Anmeldetag: 08.12.2020
(51) Int. Cl.: F01D 5/14

(54) **GASTURBINENSCHAUFEL**
GAS TURBINE BLADE
AUBE DE TURBINE À GAZ

(30) Priorität: 20.12.2019 DE 102019220493
(43) Veröffentlichungstag der Anmeldung: 26.10.2022
(73) Patentinhaber: MTU Aero Engines AG, 80995 München (DE)
(72) Erfinder: ELORZA GOMEZ, Sergio, 80995 München (DE); FROEBEL, Tobias, 80995 München (DE); WOLFRUM, Nina, 80995 München (DE); MANN, Sebastian, 80995 München (DE)
(86) Internationale Anmeldenummer: PCT/DE2020/000324
(87) Internationale Veröffentlichungsnummer: WO 2021/121456

(56) Entgegenhaltungen:
- EP-A1- 1 505 302
- EP-A2- 2 226 468
- EP-B1- 2 226 468
- WO-A1-2019/012102

## Beschreibung

Die vorliegende Erfindung betrifft eine Schaufel für eine Gasturbine, insbesondere eines Flugtriebwerks, ein Lauf- oder Leitgitter für eine Verdichter- oder Turbinenstufe einer Gasturbine, insbesondere eines Flugtriebwerks, mit der Schaufel, eine Verdichter- oder Turbinenstufe für eine Gasturbine, insbesondere eines Flugtriebwerks, mit dem Lauf- bzw. Leitgitter sowie eine Gasturbine, insbesondere Flugtriebwerk-Gasturbine, mit der Verdichter- bzw. Turbinenstufe.

Die Arbeiten, die zu dieser Erfindung geführt haben, wurden im 7. Rahmenprogramm (FP7/2007-2013) unter der Fördervertragsnummer ACP1-GA-2011-283216-LEMCOTEC ("Low Emissions Core-Engine Technologies") finanziell gefördert.

Ähnliche Schaufeln für Gasturbinen sind zum Beispiel aus den Druckschriften EP 2226468 A, WO 2019012102 A und EP 1505302A bekannt.

Eine Aufgabe einer Ausführung der vorliegenden Erfindung ist es, die Performance einer Gasturbine zu verbessern.

Diese Aufgabe wird durch eine Schaufel mit den Merkmalen des Anspruchs 1 gelöst. Ansprüche 7-9 stellen ein Lauf- bzw. Leitgitter für eine Verdichter- oder Turbinenstufe einer Gasturbine mit einer oder mehreren hier beschriebenen Schaufeln sowie eine entsprechende Verdichter- bzw. Turbinenstufe bzw. Gasturbine unter Schutz. Vorteilhafte Ausführungsformen der Erfindung sind Gegenstand der Unteransprüche.

Nach einer Ausführung der vorliegenden Erfindung weist (wenigstens) eine Schaufel für eine bzw. einer Gasturbine bzw. eine(r) Verdichter- oder Turbinenstufe bzw. ein(es) Lauf- bzw. Leitgitter(s) hierfür ein Schaufelblatt auf, wobei das Schaufelblatt einen schaufelfußseitigsten ersten Profilschnitt und einen schaufelkopfseitigsten zweiten Profilschnitt aufweist, der von dem ersten Profilschnitt in einer Radialrichtung von dem ersten Profilschnitt (weg) zu dem zweiten Profilschnitt (hin) um eine Schaufelblatthöhe beabstandet ist.

In einer Ausführung ist die Schaufel eine, bevorzugt deckbandlose, Leitschaufel für ein bzw. eines Leitgitters oder - bevorzugt - eine, vorzugsweise deckbandlose, Lauf- bzw. Rotorschaufel für ein(en) bzw. eines Laufgitters bzw. Rotor(s) für eine bzw. einer Turbinenstufe oder - bevorzugt - Verdichterstufe der Gasturbine, die ihrerseits bevorzugt eine Flugtriebwerk-Gasturbine ist.

Hierfür, besonders also für Lauf- bzw. Rotorschaufeln von (Flugtriebwerk-)Gasturbinen-Verdichter(laufgitter)n, kann die vorliegende Erfindung aufgrund der thermischen, mechanischen und strömungstechnischen Randbedingungen mit besonderem Vorteil eingesetzt werden.

Eine Axialrichtung ist in einer Ausführung in fachüblicher Weise parallel zu einer Dreh- bzw. (Haupt)Maschinenachse der Gasturbine bzw. Verdichter- oder Turbinenstufe bzw. des Lauf- bzw. Leitgitters, eine Umfangsrichtung eine Rotationsrichtung um diese Achse, eine bzw. die Radialrichtung senkrecht zu Axial- und Umfangsrichtung, bei einer Laufschaufel entsprechend von dieser Achse weg, bei einer Leitschaufel entsprechend zu dieser Achse hin. Somit ist der schaufelfußseitigste erste Profilschnitt bei einer - bevorzugten - Laufschaufel ein radial innerster bzw. drehachsnächster Profilschnitt und bei einer Leitschaufel ein radial äußerster bzw. gehäusenächster Profilschnitt und der schaufelkopfseitigste zweite Profilschnitt bei einer - bevorzugten - Laufschaufel ein radial äußerster bzw. gehäusenächster Profilschnitt und bei einer Leitschaufel ein radial innerster bzw. drehachsnächster Profilschnitt. Die Schaufelhöhe ist in einer Ausführung eine maximale, minimale oder mittlere Schaufelhöhe oder eine Schaufelhöhe an einer Vorder- oder Hinterkante des Schaufelblattes.

Ein bzw. jeder Profilschnitt weist in einer Ausführung (jeweils) einen Staffelungswinkel ("stagger angle") β auf. Hierunter wird vorliegend in einer Ausführung in fachüblicher Weise der Winkel zwischen einer Profilsehne des Profilschnitts und der Axialrichtung verstanden, wobei die Profilsehne in einer Ausführung in fachüblicher Weise eine Gerade zwischen der Vorder- und Hinterkante des Profilschnitts ist.

Nach einer Ausführung der vorliegenden Erfindung ändert sich d(ies)er Staffelungswinkel mit der bzw. über die Höhe R in Radialrichtung über dem ersten Profilschnitt wenigstens abschnittsweise (β = β(R), wobei für den ersten Profilschnitt R = 0 und für wenigstens zwei verschiedene Höhen Rᵢ, Rⱼ gilt: β(Rᵢ) ≠ β(Rⱼ)).

Diese Änderung des Staffelungswinkels über bzw. mit der Höhe R (in Radialrichtung) ändert sich in einer Ausführung ihrerseits mit der bzw. über die Höhe R in Radialrichtung über dem ersten Profilschnitt wenigstens abschnittsweise (dβ/dR = (dβ/dt)(R), wobei für wenigstens zwei verschiedene Höhen Rᵢ, Rⱼ gilt: (dβ/dR)(Rᵢ) ≠ (dβ/dR)(Rⱼ)).

Nach einer Ausführung der vorliegenden Erfindung nimmt in einem ersten Bereich [R₁, R₂] der Höhe R in Radialrichtung über dem ersten Profilschnitt zwischen einer ersten Höhe R₁ und einer zweiten, größeren Höhe R₂ die(se) Änderung (dβ/dR)(R) des Staffelungswinkels β des Schaufelblatts über der Höhe R ihrerseits mit zunehmender Höhe (in Radialrichtung) wenigstens abschnittsweise, vorzugsweise über wenigstens 50%, bevorzugt wenigstens 75%, insbesondere wenigstens 90%, in einer Ausführung 100% dieses ersten Bereichs, nicht ab. In einer Ausführung nimmt die Änderung (dβ/dR)(R) in dem ersten Bereich [R₁, R₂] zwischen der ersten Höhe R₁ und der zweiten Höhe R₂ mit zunehmender Höhe (in Radialrichtung) wenigstens abschnittsweise, vorzugsweise über wenigstens 50%, bevorzugt wenigstens 75%, insbesondere wenigstens 90%, in einer Ausführung 100% dieses ersten Bereichs, zu, in einer Ausführung monoton zu (Rᵢ > Rⱼ ⇒ (dβ/dR)(Rᵢ) ≥ (dβ/dR)(Rⱼ)), in einer Weiterbildung streng monoton zu (Rᵢ > Rⱼ ⇒ (dβ/dR)(Rᵢ) > (dβ/dR)(Rⱼ)).

Nach einer Ausführung der vorliegenden Erfindung nimmt die Änderung (dβ/dR)(R) des Staffelungswinkels β des Schaufelblatts über der Höhe R in einem an den ersten Bereich anschließenden zweiten Bereich [R₁, R₂] der Höhe R zwischen der zweiten Höhe R₂ und einer dritten, (noch) größeren Höhe R₃ mit zunehmender Höhe (in Radialrichtung) wenigstens abschnittsweise, vorzugsweise über wenigstens 50%, bevorzugt wenigstens 75%, insbesondere wenigstens 90%, in einer Ausführung 100% dieses zweiten Bereichs, ab, in einer Ausführung monoton ab (Rᵢ > Rⱼ ⇒ (dβ/dR)(Rᵢ) ≤ (dβ/dR)(Rⱼ)), in einer Weiterbildung streng monoton ab (Rᵢ > Rⱼ ⇒ (dβ/dR)(Rᵢ) < (dβ/dR)(Rⱼ)).

Erfindungsgemäß beträgt die erste Höhe wenigstens 30% und höchstens 60% der Schaufelblatthöhe, die zweite Höhe wenigstens 50% und höchstens 80% der Schaufelblatthöhe und die dritte Höhe wenigstens 80% und höchstens 100% der Schaufelblatthöhe.

Es hat sich überraschend herausgestellt, dass durch eine derartige Gestaltung im schaufelkopfnäheren Bereich, insbesondere bei Laufschaufeln, insbesondere von Gasturbinen-Verdichter(stufe)n, die Sensitivität gegenüber einer, insbesondere thermisch, fliehkaft- oder alterungsbedingten, Variation, insbesondere Vergrößerung, eines Radialspaltes zwischen Rotor und Stator reduziert werden kann, in Ausführungen um bis zu 25%. Hierdurch kann in einer Ausführung ein Wirkungsgrad der Gasturbine vergrößert werden. In einer Ausführung kann durch eine derartige Gestaltung ein (vorzuhaltender) Pumpgrenzabstand reduziert und dadurch in einer Weiterbildung ein Wirkungsgrad vergrößert werden. Zusätzlich oder alternativ kann in einer Ausführung durch eine derartige Gestaltung ein hohes Seitenverhältnis (HAR) ohne oder unter geringe(re)r Stabilitätseinbuße realisiert werden.

In einer Ausführung ist die Änderung des Staffelungswinkels über der Höhe (in Radialrichtung) in einem Endbereich zwischen 90% und 100% der Schaufelblatthöhe wenigstens abschnittsweise, vorzugsweise wenigstens zwischen 97% und 100% der Schaufelblatthöhe, bevorzugt wenigstens zwischen 95% und 100% der Schaufelblatthöhe, in einer Ausführung wenigstens zwischen 90% und 100% der Schaufelblatthöhe, negativ (dβ/dR < 0). Mit anderen Worten nimmt der Staffelungswinkel in diesem (Abschnitt des) Endbereich(s) mit in Radialrichtung zunehmender Höhe ab.

In einer Ausführung kann hierdurch insbesondere die Sensitivität gegenüber einer, insbesondere thermisch, fliehkaft- oder alterungsbedingten, Variation, insbesondere Vergrößerung, eines Radialspaltes zwischen Rotor und Stator besonders vorteilhaft reduziert und/oder eine Abströmung von dem Schaufelblatt verbessert werden.

Ein Profilschnitt weist in einer Ausführung eine Skelettlinie ("chamber line" bzw. "Profilmittellinie") auf. Hierunter wird vorliegend insbesondere in fachüblicher Weise die Verbindungslinie der Mittelpunkte der in den Profilschnitt einbeschriebenen Kreise verstanden.

Gemäß der Erfindung weist das Schaufelblatt bzw. seine Profilschnitte, in einer Ausführung deren Skelettlinien, in einem S-Schlag-Bereich der Höhe zwischen einer Anfangshöhe, die wenigstens 80% der Schaufelblatthöhe beträgt, und der Schaufelblatthöhe wenigstens abschnittsweise, in einer Ausführung in 100% dieses S-Schlag-Bereichs, einen S-Schlag bzw. zwei aneinander in einem Wendepunkt anschließende, gegensinnige Krümmungen auf. In einer Ausführung weist das Schaufelblatt bzw. seine Profilschnitte, in einer Ausführung deren Skelettlinien, in dem S-Schlag-Bereich der Höhe zwischen der Anfangshöhe und der Schaufelblatthöhe in 100% dieses S-Schlag-Bereichs einen S-Schlag bzw. zwei aneinander in einem Wendepunkt anschließende, gegensinnige Krümmungen auf, wobei die Anfangshöhe wenigstens 90% der Schaufelblatthöhe oder wenigstens 95% der Schaufelblatthöhe beträgt.

In einer Weiterbildung liegt ein bzw. der Wendepunkt des S-Schlags in wenigstens einem Profilschnitt des S-Schlag-Bereichs, vorzugsweise wenigstens in dem zweiten Profilschnitt bzw. obersten Profilschnitt des S-Schlag-Bereichs, in einem mittleren Drittel dieses Profilschnitts.

Zusätzlich oder alternativ ist in einer Ausführung ein bzw. der Wendepunkt des S-Schlags in wenigstens einem Profilschnitt des S-Schlag-Bereichs weiter von einer Hinterkante entfernt als in wenigstens einem anderen, dem ersten Profilschnitt näheren Profilschnitt des S-Schlag-Bereichs. In einer Ausführung wandert der Wendepunkt mit zunehmender Höhe von der Hinterkante weg, insbesondere zu dem mittleren Profilschnittdrittel.

Zusätzlich oder alternativ läuft in einer Ausführung ein bzw. der Wendepunkt des S-Schlags bei der Anfangshöhe in die Hinterkante ein.

Zusätzlich oder alternativ ist in einer Ausführung der Staffelungswinkel in einem Endbereich zwischen 95% und 100% der Schaufelblatthöhe wenigstens abschnittsweise, vorzugsweise wenigstens zwischen 97% und 100% der Schaufelblatthöhe, bevorzugt wenigstens zwischen 95% und 100% der Schaufelblatthöhe, in einer Ausführung wenigstens zwischen 90% und 100% der Schaufelblatthöhe, kleiner als ein Hinterkantenwinkel, insbesondere des entsprechenden Profilschnitts.

Hierdurch kann in einer Ausführung jeweils, insbesondere in Kombination von zwei oder mehr dieser Merkmale, der Staffelungswinkel vorteilhaft reduziert und dabei ein Abström- und/oder ein Inzidenzwinkel zwischen Strömungs- und Metallwinkel nicht oder wenig(er) beeinflusst werden. Dadurch kann in einer Ausführung eine Verstärkung eines Spaltwirbels, der an einer Vorderkante der Schaufelspitze entsteht, durch eine stromabwärtige Schaufelspitzenüberströmung vorteilhaft reduziert werden.

In einer Ausführung ist ein Profil-Schwerpunkt in wenigstens einem Profilschnitt des zweiten Bereichs gegenüber dem Profil-Schwerpunkt in wenigstens einem dem ersten Profilschnitt näheren Profilschnitt des zweiten Bereichs zur Saugseite des Schaufelblatts hin versetzt. In einer Ausführung ist der radiale Verlauf der Positionen der Profil-Schwerpunkte ab der zweiten Höhe in Richtung Saugseite des Schaufelblatts geneigt ("Dihedral" zur Saugseite). In einer Ausführung ist der Dihedral-Winkel der Hinterkante am zweiten Profilschnitt, insbesondere dadurch, null oder positiv.

In einer Ausführung kann hierdurch insbesondere die Sensitivität gegenüber einer, insbesondere thermisch, fliehkaft- oder alterungsbedingten, Variation, insbesondere Vergrößerung, eines Radialspaltes zwischen Rotor und Stator besonders vorteilhaft reduziert und/oder eine Abströmung von dem Schaufelblatt verbessert werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Profilschnitt einer Schaufel nach einer Ausführung der vorliegenden Erfindung;
- Fig. 2: einen weiteren Profilschnitt der Schaufel auf größerer Höhe in Radialrichtung;
- Fig. 3: einen Staffelungswinkel β der Schaufel über der Höhe R in Radialrichtung; und
- Fig. 4: einen Meridianschnitt eines Teils einer Gasturbine mit der Schaufel.

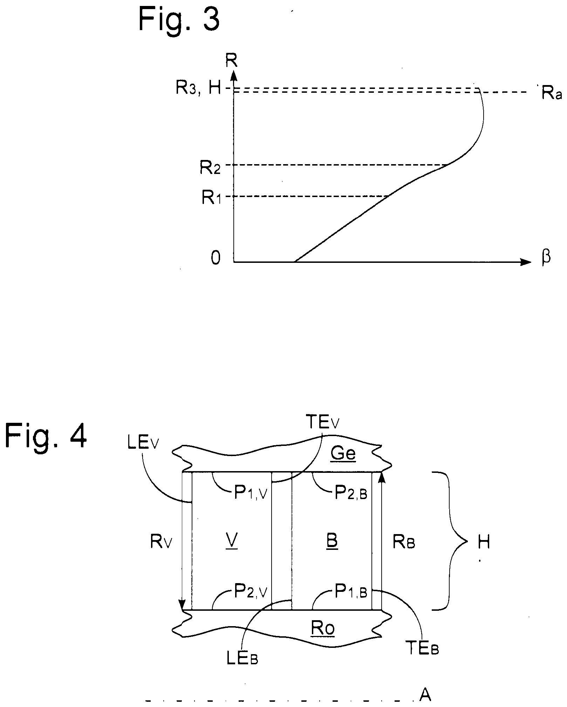

Fig. 4 zeigt einen Meridianschnitt eines Teils einer Gasturbine nach einer Ausführung der vorliegenden Erfindung mit einer Leitschaufel mit einem Schaufelblatt V, die an einem Gehäuse Ge angeordnet ist, und einer Laufschaufel mit einem Schaufelblatt B, die an einer Rotorscheibe Ro angeordnet ist.

Mit LE_{V} bzw. LE_{B} ist eine stromaufwärtige Vorderkante bezeichnet, mit TE_{V} bzw. TE_{B} ist eine stromabwärtigere Hinterkante, mit P_{1,V} bzw. P_{1,B} ein schaufelfußseitigster erster Profilschnitt, mit P_{2,V} bzw. P_{2,B} ein schaufelkopfseitigster zweiter Profilschnitt, und mit R_{V} bzw. R_{B} eine Radialrichtung von dem ersten Profilschnitt P_{1,V} bzw. P_{1,B} zu dem zweiten Profilschnitt P_{2,V} bzw. P_{2,B}, in der der zweite Profilschnitt von dem ersten Profilschnitt um eine Schaufelblatthöhe H beabstandet ist.

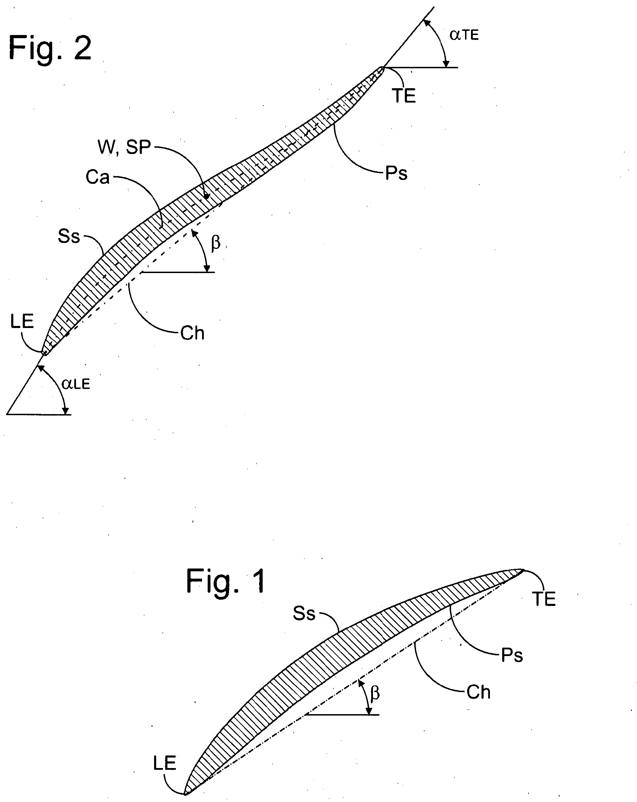

Die Schaufel der Fig. 1, 2 kann die Leitschaufel mit dem Schaufelblatt V oder die Laufschaufel mit dem Schaufelblatt B der Fig. 4 sein.

Entsprechend ist in Fig. 1, 2 die Vorderkante einheitlich mit LE bezeichnet, die Hinterkante mit TE. Mit Ps bzw. Ss ist in Fig. 1, 2 eine Druck- bzw. Saugseite und mit β ein Staffelungswinkel des Profilschnitts bzw. ein Winkel zwischen seiner Profilsehne Ch und der zur Drehachse A (vgl. Fig. 4) parallelen Axialrichtung bezeichnet, mit Ca in Fig. 1 die Skelettlinie des Profilschnitts, mit α_{LE} bzw. α_{TE} ein Vorder- bzw. Hinterkantenwinkel.

Der Staffelungswinkel β des Profilschnitts der Fig. 2 ist kleiner als der Hinterkantenwinkel α_{TE} des Profilschnitts.

Fig. 3 zeigt den Verlauf des Staffelungswinkels β über der Höhe R in Radialrichtung (vgl. Fig. 4).

Dabei bezeichnet R₁ eine erste Höhe über dem ersten Profilschnitt, die wenigstens 30% und höchstens 60% der Schaufelblatthöhe H (vgl. Fig. 4) beträgt, R₂ eine zweite, größere Höhe über dem ersten Profilschnitt, die wenigstens 50% und höchstens 80% der Schaufelblatthöhe H beträgt, R₃ eine dritte, noch größere Höhe über dem ersten Profilschnitt, die wenigstens 80% und höchstens 100% der Schaufelblatthöhe H beträgt, und Rₐ eine Anfangshöhe über dem ersten Profilschnitt, die im Ausführungsbeispiel 97% der Schaufelblatthöhe H beträgt.

Der Staffelungswinkel β des Schaufelblatts ändert sich über die bzw. mit der Höhe R in Radialrichtung wenigstens abschnittsweise (β = β(R)), wobei diese Änderung dβ/dR des Staffelungswinkels β über der Höhe in einem ersten Bereich [R₁, R₂] zwischen der ersten und zweiten Höhe R₁, R₂ mit zunehmender Höhe zunimmt und in einem anschließenden zweiten Bereich [R₂, R₃] zwischen der zweiten und dritten Höhe R₂, R₃ mit zunehmender Höhe abnimmt und dabei in einem schaufelkopfseitigen Endbereich des Schaufelblatts negativ ist.

Der Profilschnitt der Fig. 2 liegt in einem S-Schlag-Bereich der Höhe zwischen 97% und 100% der Schaufelblatthöhe H. Der Profilschnitt bzw. seine Skelettlinie Ca weist einen S-Schlag mit einem Wendepunkt W auf, der im Ausführungsbeispiel nur zufällig mit einem Profil-Schwerpunkt SP zusammenfällt.

Der Wendepunkt W liegt in einem mittleren Drittel des Profilschnitts. Mit abnehmender Höhe wandert er zur Hinterkante hin und läuft schließlich am unteren Ende des S-Schlag-Bereichs in diese ein.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- A: Drehachse
- B: Laufschaufel(schaufelblatt)
- Ca: Skelettlinie
- Ch: Profilsehne
- Ge: Gehäuse
- H: Schaufelblatthöhe
- LE_{(B;V)}: Vorderkante
- Ps: Druckseite
- P_{1B}; P_{1V}: erster Profilschnitt
- P_{2B}; P_{2V}: zweiter Profilschnitt
- R_{(B;V)}: Höhe in Radialrichtung über erstem Profilschnitt
- R₁: erste Höhe
- R₂: zweite Höhe
- R₃: dritte Höhe
- Ra: Anfangshöhe
- Ro: Rotorscheibe
- SP: Profil-Schwerpunkt
- Ss: Saugseite
- TE_{(B;V)}: Hinterkante
- V: Leitschaufel(schaufelblatt)
- W: Wendepunkt
- α_{LE}: Vorderkantenwinkel
- α_{TE}: Hinterkantenwinkel
- β: Staffelungswinkel

## Patentansprüche

1. Schaufel für eine Gasturbine, insbesondere eines Flugtriebwerks, mit einem Schaufelblatt (B; V), das einen schaufelfußseitigsten ersten Profilschnitt (P_{1B}; P_{1V}) und einen schaufelkopfseitigsten zweiten Profilschnitt (P_{2B}; P_{2V}) aufweist, der von dem ersten Profilschnitt in einer Radialrichtung (R_{B}; R_{V}) von dem ersten Profilschnitt zu dem zweiten Profilschnitt um eine Schaufelblatthöhe (H) beabstandet ist, wobei ein Staffelungswinkel (β) des Schaufelblatts sich mit einer Höhe (R) in Radialrichtung über dem ersten Profilschnitt wenigstens abschnittsweise ändert, wobei in einem ersten Bereich zwischen einer ersten Höhe (R₁) und einer zweiten, größeren Höhe (R₂) die Änderung (dβ/dR) des Staffelungswinkels (β) über der Höhe (R) mit zunehmender Höhe (R) wenigstens abschnittsweise nicht abnimmt und in einem anschließenden zweiten Bereich zwischen der zweiten Höhe (R₂) und einer dritten, noch größeren Höhe (R₃) mit zunehmender Höhe (R) wenigstens abschnittsweise abnimmt, wobei die erste Höhe (R₁) wenigstens 30% und höchstens 60% der Schaufelblatthöhe (H), die zweite Höhe (R₂) wenigstens 50% und höchstens 80% der Schaufelblatthöhe (H) und die dritte Höhe (R₃) wenigstens 80% und höchstens 100% der Schaufelblatthöhe (H) beträgt, **dadurch gekennzeichnet, dass** eine Skelettlinie des Schaufelblatts (B; V) in einem S-Schlag-Bereich der Höhe zwischen einer Anfangshöhe (Rₐ), die wenigstens 80% der Schaufelblatthöhe (H) beträgt, und der Schaufelblatthöhe (H) wenigstens abschnittsweise einen S-Schlag aufweist.

2. Schaufel nach Anspruch 1, **dadurch gekennzeichnet, dass** die Änderung (dβ/dR) des Staffelungswinkels (β) über der Höhe (R) in einem Endbereich zwischen 90% und 100% der Schaufelblatthöhe (H) wenigstens abschnittsweise negativ ist.

3. Schaufel nach dem vorhergehenden Anspruch, **dadurch gekennzeichnet, dass** ein Wendepunkt (W) des S-Schlags in wenigstens einem Profilschnitt des S-Schlag-Bereichs in einem mittleren Drittel dieses Profilschnitts liegt und/oder weiter von einer Hinterkante entfernt ist als in wenigstens einem dem ersten Profilschnitt näheren Profilschnitt des S-Schlag-Bereichs und/oder ein Wendepunkt (W) des S-Schlags bei der Anfangshöhe (Rₐ) in die Hinterkante einläuft.

4. Schaufel nach einem der vorhergehenden Ansprüche, **dadurch gekennzeichnet, dass** der Staffelungswinkel in einem Endbereich zwischen 95% und 100% der Schaufelblatthöhe (H) wenigstens abschnittsweise kleiner als ein Hinterkantenwinkel (α_{TE}) ist.

5. Schaufel nach einem der vorhergehenden Ansprüche, **dadurch gekennzeichnet, dass** ein Profil-Schwerpunkt (SP) in wenigstens einem Profilschnitt des zweiten Bereichs gegenüber dem Profil-Schwerpunkt in wenigstens einem dem ersten Profilschnitt näheren Profilschnitt des zweiten Bereichs zu einer Saugseite (Ss) des Schaufelblatts hin versetzt ist.

6. Lauf- oder Leitgitter für eine Verdichter- oder Turbinenstufe einer Gasturbine, insbesondere eines Flugtriebwerks, mit wenigstens einer Schaufel nach einem der vorhergehenden Ansprüche.

7. Verdichter- oder Turbinenstufe für eine Gasturbine, insbesondere eines Flugtriebwerks, mit wenigstens einem Lauf- und/oder wenigstens einem Leitgitter nach dem vorhergehenden Anspruch.

8. Gasturbine, insbesondere Flugtriebwerk-Gasturbine, mit wenigstens einer Verdichter- und/oder wenigstens einer oder Turbinenstufe nach dem vorhergehenden Anspruch.

## Claims

1. Blade for a gas turbine, in particular of an aircraft engine, having an airfoil (B; V) which has a first profile section (P_{1B}; P_{1V}) on the blade root side and a second profile section (P_{2B}; P_{2V}) on the blade tip side, which is spaced apart from the first profile section in a radial direction (R_{B}; Rv) from the first profile section to the second profile section by an airfoil height (H), wherein a stagger angle (β) of the airfoil changes, at least in some portions, by a height (R) in the radial direction above the first profile section, wherein, in a first region between a first height (R₁) and a second, larger height (R₂), the change (dβ/dR) in the stagger angle (β) over the height (R) does not decrease, at least in some portions, with increasing height (R) and, in a subsequent second region between the second height (R₂) and a third, even greater height (R₃), decreases, at least in some portions, with increasing height (R), wherein the first height (R₁) is at least 30% and at most 60% of the airfoil height (H), the second height (R₂) is at least 50% and at most 80% of the airfoil height (H) and the third height (R₃) is at least 80% and at most 100% of the airfoil height (H), **characterized in that** a camber line of the airfoil (B; V) in a reflex region of the height between an initial height (Rₐ), which is at least 80% of the airfoil height (H), and the airfoil height (H) has a reflex at least in some portions.

2. Blade according to claim 1, **characterized in that** the change (dβ/dR) in the stagger angle (β) over the height (R) in an end region between 90% and 100% of the airfoil height (H) is negative at least in some portions.

3. Blade according to the preceding claim, **characterized in that** a turning point (W) of the reflex in at least one profile section of the reflex region lies in a middle third of this profile section and/or is further away from a trailing edge than in at least one profile section of the reflex region closer to the first profile section and/or a turning point (W) of the reflex at the initial height (Rₐ) runs into the trailing edge.

4. Blade according to any of the preceding claims, **characterized in that** the stagger angle in an end region between 95% and 100% of the airfoil height (H) is smaller than a trailing edge angle (α_{TE}) at least in some portions.

5. Blade according to any of the preceding claims, **characterized in that** a profile center of gravity (SP) in at least one profile section of the second region is offset toward a suction side (Ss) of the airfoil relative to the profile center of gravity in at least one profile section of the second region closer to the first profile section.

6. Rotor vane or guide vane for a compressor stage or turbine stage of a gas turbine, in particular of an aircraft engine, having at least one blade according to any of the preceding claims.

7. Compressor stage or turbine stage for a gas turbine, in particular of an aircraft engine, having at least one rotor vane and/or at least one guide vane according to the preceding claim.

8. Gas turbine, in particular aircraft engine gas turbine, having at least one compressor stage and/or turbine stage according to the preceding claim.

## Revendications

1. Aube pour une turbine à gaz, en particulier d'un moteur d'aéronef, comportant une pale d'aube (B ; V) qui présente une première section de profil (P_{1B} ; P_{1V}) côté pied d'aube et une seconde section de profil (P_{2B} ; P_{2V}) côté tête d'aube qui est espacée de la première section de profil d'une hauteur d'aube (H) dans une direction radiale (Re ; Rv) allant de la première section de profil à la seconde section de profil, dans lequel un angle de décalage (β) de la pale d'aube varie, au moins dans certaines sections, avec une hauteur (R) dans la direction radiale sur la première section de profil, dans lequel, dans une première zone entre une première hauteur (R₁) et une deuxième hauteur (R₂) plus grande, la variation (dβ/dR) de l'angle de décalage (β) sur la hauteur (R) ne diminue pas, au moins dans certaines sections, avec l'augmentation de la hauteur (R) et, dans une seconde zone suivante entre la deuxième hauteur (R₂) et une troisième hauteur (R₃) encore plus grande, diminue, au moins dans certaines sections, avec l'augmentation de la hauteur (R), dans lequel la première hauteur (R₁) représente au moins 30 % et au plus 60 % de la hauteur de pale d'aube (H), la deuxième hauteur (R₂) représente au moins 50 % et au plus 80 % de la hauteur de pale d'aube (H) et la troisième hauteur (R₃) représente au moins 80 % et au plus 100 % de la hauteur de pale d'aube (H), **caractérisée en ce qu'**un squelette de la pale d'aube (B ; V) présente, au moins dans certaines sections, une déviation en S dans une zone de déviation en S de la hauteur entre une hauteur initiale (Rₐ) égale à au moins 80 % de la hauteur de pale d'aube (H) et la hauteur de pale d'aube (H).

2. Aube selon la revendication 1, **caractérisée en ce que** la variation (dβ/dR) de l'angle de décalage (β) sur la hauteur (R) est négative, au moins dans certaines sections, dans une zone d'extrémité comprise entre 90 % et 100 % de la hauteur de pale d'aube (H).

3. Aube selon la revendication précédente, **caractérisée en ce qu'**un point d'inflexion (W) de la déviation en S dans au moins une section de profil de la zone de déviation en S est situé dans un tiers central de ladite section de profil et/ou est plus éloigné d'un bord de fuite que dans au moins une section de profil de la zone de déviation en S plus proche de la première section de profil et/ou un point d'inflexion (W) de la déviation en S à la hauteur initiale (Rₐ) entre dans le bord de fuite.

4. Aube selon l'une des revendications précédentes,
**caractérisée en ce que** l'angle de décalage est, au moins dans certaines sections, inférieur à un angle de bord de fuite (α_{TE}) dans une zone d'extrémité comprise entre 95 % et 100 % de la hauteur de pale d'aube (H).

5. Aube selon l'une des revendications précédentes,
**caractérisée en ce qu'**un centre de gravité de profil (SP) dans au moins une section de profil de la seconde zone est décalé vers un extrados (Ss) de la pale d'aube par rapport au centre de gravité de profil dans au moins une section de profil de la seconde zone plus proche de la première section de profil.

6. Grille mobile ou grille directrice pour un étage de compresseur ou de turbine d'une turbine à gaz, en particulier d'un moteur d'aéronef, comportant au moins une aube selon l'une des revendications précédentes.

7. Étage de compresseur ou de turbine pour une turbine à gaz, en particulier d'un moteur d'aéronef, comportant au moins une grille mobile et/ou au moins une grille directrice selon la revendication précédente.

8. Turbine à gaz, en particulier turbine à gaz de moteur d'aéronef, comportant au moins un étage de compresseur et/ou au moins un ou étage de turbine selon la revendication précédente.
